# EUROPEAN PATENT APPLICATION

(11) **EP 4 624 105 A1**
(43) Date of publication of application: **01.10.2025**
(21) Application number: 23893003.6
(22) Date of filing: 28.04.2023
(51) Int. Cl.: B25J 9/00

(54) **LIGHTWEIGHT BODY-ASSISTIVE DEVICE BASED ON SINGLE DRIVE ACTUATOR**

(30) Priority: 24.11.2022 CN 202211496045
(71) Applicant: Hypershell Co., Ltd., Shanghai 200120 (CN)
(72) Inventor: SUN, Kuan, Shanghai 200120 (CN)
(74) Representative: Cabinet Beau de Loménie
(86) International application number: PCT/CN2023/091431
(87) International publication number: WO 2024/108902

(57) **Abstract**

An efficient and rapid lightweight body-assistance device based on a single drive actuator, the device comprising: a drive actuator (3), and a first drive rod (1) and a second drive rod (2) which are respectively arranged on two sides of the drive actuator (3), wherein the drive actuator (3) comprises a stator housing (31) and a rotor rotary shaft (32) which can rotate relative to the stator housing (31); the first drive rod (1) rotates along with the stator housing (31); the second drive rod (2) rotates along with the rotor rotary shaft (32); one side of the first drive rod (1) is connected to a first drive back end (41) matching the leg on one side of the body; and one side of the second drive rod (2) is connected to a second drive back end (42) matching the leg on the other side of the body. When the drive actuator (3) is in operation, the stator housing (31) and the rotor rotary shaft (32) rotate in a reciprocating manner within a certain angle, so as to drive the first drive rod (1) and the second drive rod (2) to drive the legs on two sides of the body to perform reciprocating swinging relative to each other.

## Description

### TECHNICAL FIELD

The present disclosure relates to the field of human body exoskeleton walking assistance, and particularly relates to a lightweight human body assistance device based on a single drive actuator.

### BACKGROUND

Walking assistance exoskeletons can provide assistance to users for standing up and walking, and are commonly used in walking and running scenarios in medical rehabilitation, industrial safety, and outdoor tourism. These devices can extend walking time, enhance walking ability, and conserve energy for users.

In an existing assistance device for a lower part of a human body, drive units are generally mounted on two sides of hips or on a back. In terms of power, a drive electrode or a hydraulic drive is mainly adopted. In respect of a mounting position and a type of drive motors, large-volume and heavy disc-type motors are mainly adopted and are mounted at various joints of lower limbs, e.g., at left and right hip joints and knee joints. In the solution of a hydraulic drive, a hydraulic actuator is mostly fixed to a back in a backpack form.

Lower-limb assistance exoskeletons manufactured with the above existing technologies mainly have the following shortcomings.
1. Multiple drive motors increase overall weight and power consumption of the assistance exoskeleton, and thus a user needs to carry a power source with a larger capacity, which further increases the overall weight and power consumption. This is very environmentally unfriendly and fails to balance endurance and a lightweight wearing experience.
2. Multiple drive motors make it more difficult to control an entire assistance exoskeleton system, thereby increasing instability of the system.
3. Equipment using hydraulic/pneumatic drives is heavier than equipment using the drive motors, and mass of the equipment itself adds significant burden to the user's waist and back. Advantages of assistance are only evident under heavy loads.
4. Hydraulic or pneumatic artificial muscles are exposed to natural environment and are prone to rust and malfunction.

Therefore, assistance exoskeletons designed using an existing multi-motor drive solution or a hydraulic/pneumatic drive solution is bulky. It is difficult for a single person to wear the assistance exoskeletons independently, and hard to store the assistance exoskeletons when not worn.

### SUMMARY

The technical problem to be solved by the present disclosure: the purpose of the present disclosure is to solve the shortcomings of the existing technologies and provide a lightweight human body assistance device based on a single drive actuator, which is lighter, consumes less power, and is easier to control compared to the existing designs.

The technical solutions of the present disclosure: the present disclosure provides an efficient and rapid lightweight human body assistance device based on a single drive actuator, including a drive actuator, and a first drive rod and a second drive rod respectively set on two sides of the drive actuator, wherein the drive actuator includes a stator housing and a rotor shaft that is rotatable relative to the stator housing;
the first drive rod rotates with the stator housing; and the second drive rod rotates with the rotor shaft;
one side of the first drive rod is connected to a first drive back end that matches a leg on one side of a human body, and one side of the second drive rod is connected to a second drive back end that matches a leg on other side of the human body;
when the drive actuator is in operation, the stator housing and the rotor shaft rotate reciprocally within a certain angle such that the first drive rod and the second drive rod are driven to drive legs on both sides to move reciprocally relative to each other.

Further, a front end of the first drive rod is connected to the stator housing, and a back end of the first drive rod is connected to the first drive back end that fits the leg on one side of the human body; and
a front end of the second drive rod is connected to the rotor shaft, and a back end of the second drive rod is connected to the second drive back end that fits the leg on the other side of the human body.

Further, a fixing joint is connected to each of the first drive rod and the second drive rod, the fixing joint is connected to the human body and provides support and fixation for a walking exoskeleton; and each of the first drive rod and the second drive rod rotates around a corresponding fixing joint.

Further, the fixing joint is fixed around a hip joint of the human body.

Further, the lightweight human body assistance device based on a single drive actuator further includes a waist belt that matches the human body; and the fixing joint is fixed around the hip joint of the human body through the waist belt.

Further, the first drive rod includes a first rotating arm and a first curved rod; and the second drive rod includes a second rotating arm and a second curved rod;
a front end of the first rotating arm is connected to the stator housing, and a back end of the first curved rod is equipped with the first drive back end that is connected to and matches the leg on one side of the human body; and
a front end of the second rotating arm is connected to the rotor shaft, and a back end of the second curved rod is equipped with the second drive back end that is connected to and matches the leg on the other side of the human body.

Further, the first rotating arm and the first curved rod are hinged; and the second rotating arm and the second curved rod are hinged.

Further, there is a certain range of relative displacement space between the first curved rod and the first drive back end; and
there is a certain range of relative displacement space between the second curved rod and the second drive back end.

Further, a connecting block is arranged between the first curved rod and the first drive back end, the first curved rod is connected to one side of the connecting block through a spherical linkage, and the first drive back end is slidably connected to other side of the connecting block; and
a connecting block is arranged between the second curved rod and the second drive back end, the second curved rod is connected to one side of the connecting block through a spherical linkage, and the second drive back end is slidably connected to other side of the connecting block.

Further, the first drive back end and the second drive back end are arc-shaped plates that match the legs of the human body.

Further, the arc-shaped plates are located in front of or behind the legs of the human body.

Further, the drive actuator is horizontally positioned at a back or front of the waist and abdomen of the human body;
the first drive rod and the second drive rod are rigidly connected to the two sides of the drive actuator, respectively; and the drive actuator is suspended around the human body when in use.

Further, an angle between the first drive rod and the stator housing is adjustable; and an angle between the second drive rod and the rotor shaft is adjustable.

Further, the stator housing is set inside a sleeve, one side of the sleeve is provided with an opening that allows the housing to move reciprocally relative to the sleeve, and a depth of the stator housing in the sleeve is adjustable; and
the first drive rod is connected to the stator housing through the sleeve, and an angle between the first drive rod and the stator housing is adjustable.

### Beneficial Effects

Compared with existing technologies, the present disclosure has the following beneficial effects.
1. During walking, the traditional dual-drive motor solution applies the counteracting force to the waist and back, leading to a poor user experience. In the present disclosure, the force from the single drive motor acts directly on the leg being lifted, and the counteracting force acts directly on a supporting leg in contact with the ground. Therefore, the point of force is transferred to the ground. By transferring the point of force to the ground, the problem that the counteracting force acts on the waist and back of the human body in existing devices is solved.
2. Compared to the existing dual-drive, one drive actuator is reduced in the present disclosure. Therefore, the cost, the power consumption, and weight are reduced, and the overall assistance performance is improved. Also, it is extremely convenient to control the device. The rotating base of the drive device is rigidly connected to the drive actuator, the drive actuator is suspended on one side of the human body, the assistance force generated by the drive rod that rotating relative to the rotating base acts directly on both legs to separate and merge them, which is independent of the hips. Thus, the hips only need to bear part of the weight of the assistance device, avoiding the situation where there is local effort-saving but overall effort-consuming.
3. Multiple adjustment manners are provided, including adjusting the angle between the first drive rod and the motor and the angle between the second drive rod and the motor, adjusting the tightness of the waist belt, and adjusting the expansion and contraction distance between the motor and the sleeve, making it suitable for users of different body types.
4. The spherical joints and sliders at the leg guards improve ergonomics and improve wearing comfort. The present disclosure only includes the drive actuator, and the first and second drive rods, with a simple overall structure, fewer components, and more movable joints. The device can be folded for compact storage. The working principle of the present disclosure is simple and easy to learn, reducing the learning cost and enabling efficient single-person use.

### BRIEF DESCRIPTION OF DRAWINGS

FIG. 1 is an overall structural diagram of the present disclosure;
FIG. 2 is a top view of FIG. 1;
FIG. 3 is a specific structural diagram of a drive actuator in the present disclosure;
FIG. 4 is a specific structural diagram of a first drive rod in the present disclosure;
FIG. 5 is a specific structural diagram of a second drive rod in the present disclosure;
FIG. 6 is a usage state diagram of the present disclosure;
FIG. 7 is a structural diagram of a connection between a first curved rod and a first drive back end in the present disclosure;
FIG. 8 is a schematic diagram showing the adjustment of a waist size by adjusting an angle between the drive actuator and each of the drive rods set on two sides of the drive actuator;
FIG. 9 is a schematic diagram showing the adjustment of the waist size by adjusting a depth of the stator housing inserted into the sleeve;
FIG. 10 is a schematic diagram showing a state where a right foot is on the ground and a left foot is lifted in an embodiment of the present disclosure; and
FIG. 11 is a schematic diagram showing a state where the left foot is on the ground and the right foot is lifted in an embodiment of the present disclosure.

### DETAILED DESCRIPTION

To deepen the understanding of the present disclosure, the present disclosure will be described in more detail below in conjunction with specific embodiments. These embodiments are only used to explain the present disclosure and do not limit the scope of protection of the present disclosure.

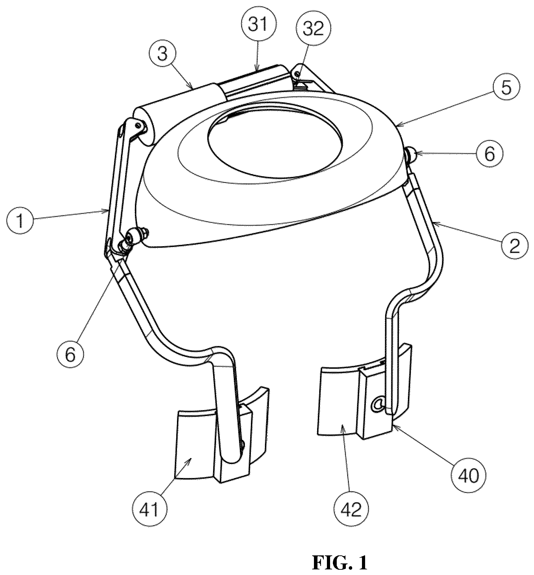

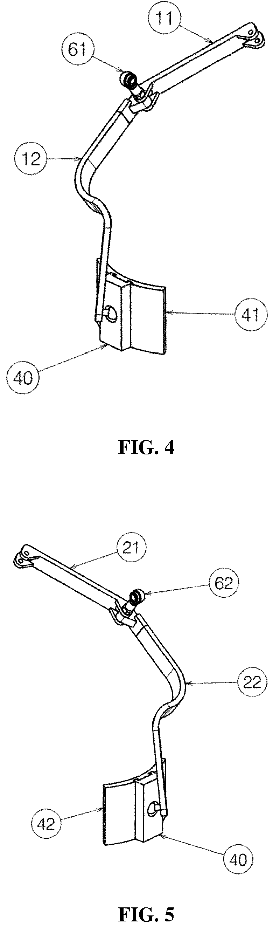

A lightweight human body assistance device based on a single actuator, as shown in FIG 1 to FIG. 9, includes a drive actuator 3, and a first drive rod 1 and a second drive rod 2 respectively set on two sides of the drive actuator 3. The drive actuator 3 includes a stator housing 31 and a rotor shaft 32 rotatable relative to the stator housing 31.

A front end of the first drive rod 1 is connected to the stator housing 31, and a back end of the first drive rod 1 is connected to a first drive back end 41 that fits a leg on one side of a human body; and a front end of the second drive rod 2 is connected to the rotor shaft 32, and a back end of the second drive rod 2 is connected to a second drive back end 42 that fits a leg on the other side of the human body.

The first drive rod 1 includes a first rotating arm 11 and a first curved rod 12, and the second drive rod 2 includes a second rotating arm 21 and a second curved rod 22.

The front end of the first rotating arm 11 is connected to the stator housing 31, and a back end of the first curved rod 12 is equipped with the first drive back end 41 that is connected to and matches the leg on one side of a human body.

The front end of the second rotating arm 21 is connected to the rotor shaft 32, and the back end of the second curved rod 22 is equipped with the second drive back end 42 that is connected to and matches the leg on one side of a human body.

The first rotating arm 11 and the first curved rod 12 are hinged, and the second rotating arm 21 and the second curved rod 22 are hinged. There is a certain range of relative displacement space between the first curved rod 12 and the first drive back end 41, and there is a certain range of relative displacement space between the second curved rod 22 and the second drive back end 42.

A connecting block 40 is arranged between the first curved rod 12 and the first drive back end 41, the first curved rod 12 is connected to one side of the connecting block 40 through a spherical linkage, and the first drive back end 41 is slidably connected to the other side of the connecting block 40.

Another connecting block 40 is arranged between the second curved rod 22 and the second drive back end 42, the second curved rod 22 is connected to one side of the connecting block 40 through a spherical linkage, and the second drive back end 42 is slidably connected to the other side of the connecting block 40.

When the drive actuator 3 is in operation, the stator housing 31 and the rotor shaft 32 rotate reciprocally within a certain angle, the first drive rod 1 rotates with the stator housing 31, and the second drive rod 2 rotates with the rotor shaft 32 so as to drive the legs on both sides of the human body to move reciprocally relative to each other.

A fixing joint 6 is connected to each of the first drive rod 1 and the second drive rod 2. The fixing joint 6 is fixed around the hip joint of the human body through a waist belt 5and provide support and fixation for the walking exoskeleton. Each of the first drive rod 1 and the second drive rod 2 rotates around a corresponding fixing joint 6.

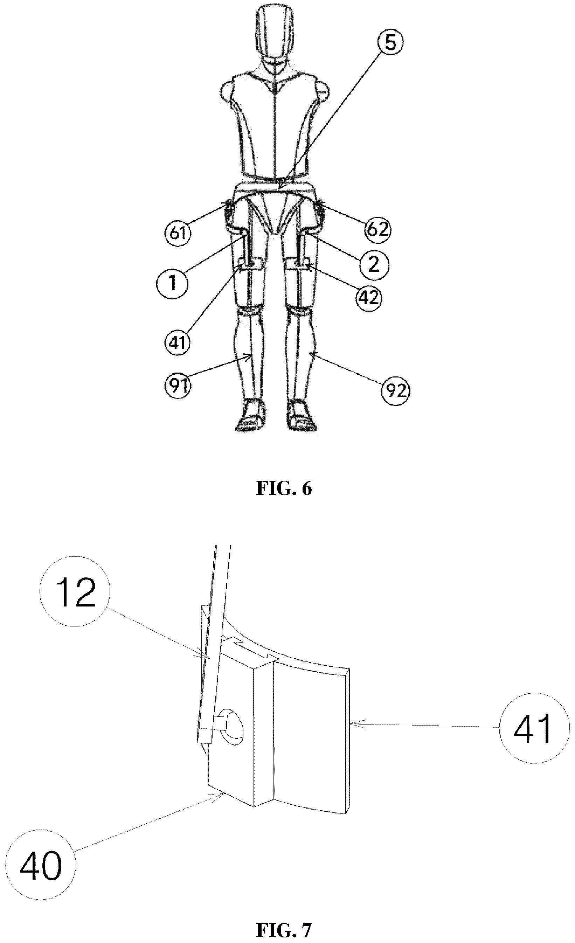

The first drive back end 41 and the second drive back end 42 are arc-shaped plates that match the legs of the human body. As shown in FIG. 6, in this embodiment, the arc-shaped plates are located in front of the legs, and the drive actuator 3 is horizontally positioned at the back of the waist and abdomen of the human body.

As shown in FIG. 6, the waist belt 5 is worn around the user's waist. The drive actuator 3 is located behind the waist. The fixing joints are set on both sides of the human body, and include a right fixing joint 61 and a left fixing joint 62.

The right fixing joint 61 is connected to the right wing of the waist belt 5, and the left fixing joint 62 is connected to the left wing of the waist belt 5. The first drive back end 41 is strapped to the user's right thigh, and the second drive back end 42 is strapped to the user's left thigh.

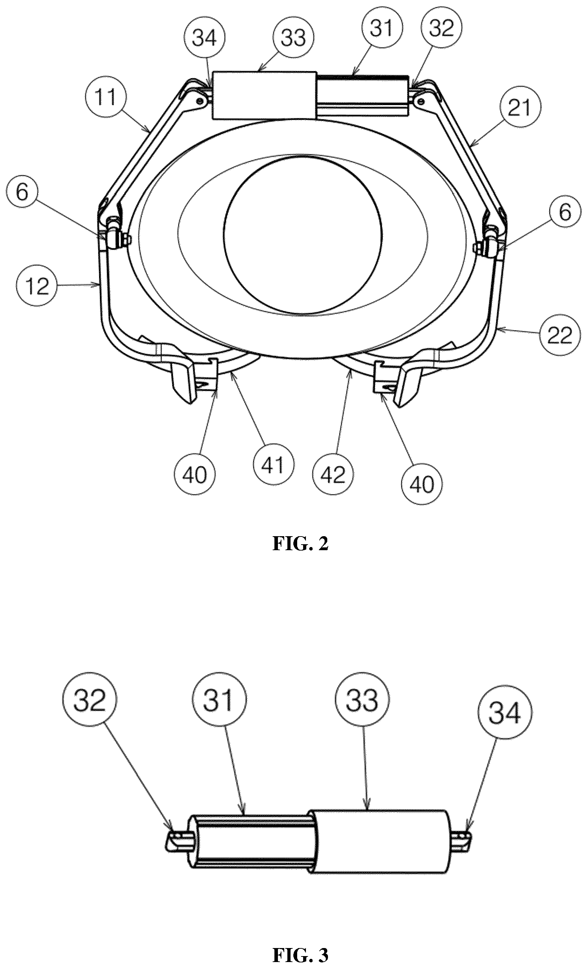

As shown in FIG. 3, the drive actuator 3 consists of a stator housing 31, a rotor shaft 32, a sleeve 33, and a right connecting shaft 34. The drive actuator 3 drives the rotor shaft 32 to rotate relative to the stator housing 31. There is an axial track between the sleeve 33 and the stator housing 31, the right connecting shaft 34 is connected to the first drive rod 1, and the rotor shaft 32 is connected to the second drive rod 2. The drive actuator 3 may use a rotary motor.

The second drive rod 2 and the first drive rod 1 are symmetrically designed.

The left fixing joint 62 is mounted on the hinge between the second rotating arm 21 and the second curved rod 22, and the left fixing joint 62 uses a spherical sliding bearing. The second drive back end 42 and the second curved rod 22 are connected through another spherical joint.

As shown in FIG. 7, the connecting block 40 provides a critical degree of freedom for the entire mechanism, allowing the entire mechanism to operate comfortably in cooperation with the human body. Because the fixing joints 6 on both sides often cannot precisely couple with the left and right hip joints when worn, the rotation of the left and right thighs and the rotation of the second drive rod 2 and the first drive rod 1 are not concentric during walking. Consequently, there is a sliding tendency of the first drive back end 41 at the back end of the first drive rod 1 and the second drive back end 42 at the back end of the second drive rod 2 relative to the locating positions on the thighs.

This sliding tendency is ultimately reflected as a pressing sensation on the user's left and right thighs from the first drive back end 41 and the second drive back end 42, thereby affecting the wearing comfort.

Therefore, the connecting block 40 is set between the drive rod and the drive back end, one side of the connecting block 40 is connected to the curved rod of the drive rod through a spherical linkage, and the other side of the connecting block 40 is slidably connected to the drive back end. Therefore, there is a certain space of relative motion between the drive back end and the thigh, thereby resolving the sliding tendency and pressing sensation, and enhancing the wearing comfort.

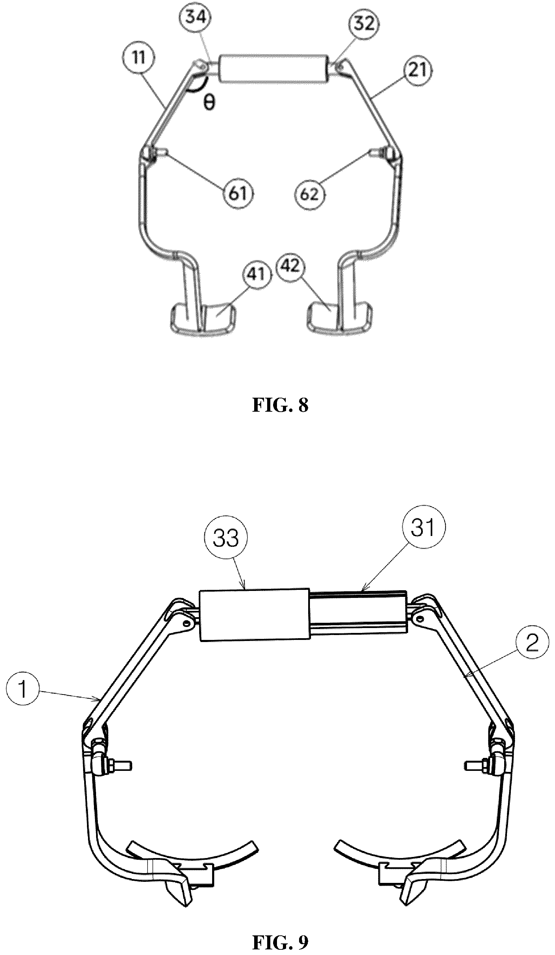

FIG. 8 is a diagram showing the adjustment of the waist size. The first drive rod 1 is connected to the sleeve 33 by a shaft, and the second drive rod 2 is connected to the rotor shaft 32 by a shaft. These two shafts may be loosened or tightened, such that the drive actuator 3 and the first and second drive rods set on two sides of the drive actuator 3 can be fixed at any angle. By increasing or decreasing the angle θ between the drive actuator 3 and each of the first drive rod and the second drive rod, a distance between the left and right fixing joints 61 can be increased or decreased. Thus, the device, in cooperation with the adjustable waist belt, is suitable for users with different waist sizes.

FIG. 9 shows another method of adjusting the width between the first drive rod 1 and the second drive rod 2 to fit users of different body types. The stator housing 31 and the sleeve 33 can perform axial telescopic motion through a guide rail, and their relative positions can be fixed after the telescopic length is fixed, thereby increasing or decreasing the distance between the first drive rod 1 and the second drive rod 2.

FIG. 6 is a diagram showing the standing posture of the user when wearing the present disclosure.

The entire mechanism is connected to the left and right wings of the waist belt 5 through fixing joints 6 on both sides, and the waist belt 5 remains fixed and stationary with the user's waist.

At this time, the rotor shaft 32 and the stator housing 31 of the drive actuator 3 are in a balanced state, and both are at the same angle, with an angle difference of 0. In the standing posture, the user's left and right feet can both be on the ground; and the drive actuator 3 is located behind or in front of the user's waist, and is in a horizontal state relative to the ground.

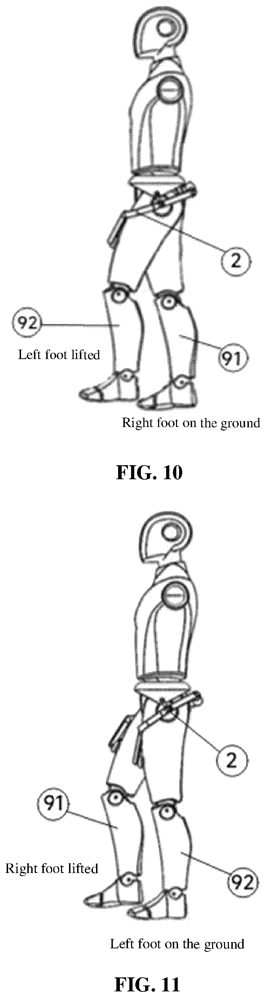

FIG. 10 is a diagram showing the posture of the user when the left foot is lifted while wearing the present disclosure. At this time, the rotor shaft 32 of the drive actuator 3 rotates forward relative to the stator housing 31. Correspondingly, the second drive rod 2 also rotates forward relative to the first drive rod 1.

In this posture, the user's right leg 91 is on the ground and remains stationary relative to the ground. Since the first drive rod 1 is strapped to the right leg 91, the first drive rod 1 is also stationary relative to the ground. In this state, the second drive rod 2 is lifted under the action of the counteracting force generated by the drive actuator 3, thereby driving the user's left leg 92 to be lifted.

FIG. 11 is a diagram showing the posture of the user when the right foot is lifted while wearing the present disclosure. At this time, the rotor shaft 32 of the drive actuator 3 rotates inversely relative to the stator housing 31. Correspondingly, the second drive rod 2 also rotates inversely relative to the first drive rod 1. In this posture, the user's left leg 92 is on the ground and remains stationary relative to the ground. Since the second drive rod 2 is strapped to the left leg 92, the second drive rod 2 is also stationary relative to the ground. In this state, the first drive rod 1 is lifted under the action of the counteracting force generated by the drive actuator 3, thereby driving the user's right leg 91 to be lifted.

In summary, by giving the drive actuator 3 alternating forward and reverse rotations, the left and right legs can alternately be lifted and grounded, thus enabling the user to walk.

The above shows and describes the basic principles, main features, and advantages of the present disclosure. Technical personnel in this field should understand that the present disclosure is not limited to the above embodiments. The above embodiments and descriptions in the specification only illustrate the principles of the present disclosure. Within the spirit and scopes of the present disclosure, various variations and improvements may be made, and these variations and improvements are all within the scope of protection of the present disclosure. The scope of protection of the present disclosure is defined by the appended claims and their equivalents.

## Claims

1. A lightweight human body assistance device based on a single actuator, comprising: a drive actuator (3), and a first drive rod (1) and a second drive rod (2) respectively set on two sides of the drive actuator (3); wherein,
the drive actuator (3) comprises a stator housing (31) and a rotor shaft (32) rotatable relative to the stator housing (31);
the first drive rod (1) rotates with the stator housing (31), and the second drive rod (2) rotates with the rotor shaft (32);
one side of the first drive rod (1) is connected to a first drive back end (41) that matches a leg on one side of the human body, and one side of the second drive rod (2) is connected to a second drive back end (42) that matches a leg on other side of the human body; and
when the drive actuator (3) is in operation, the stator housing (31) and the rotor shaft (32) rotate reciprocally within a certain angle such that the first drive rod (1) and the second drive rod (2) are driven to drive legs on both sides to move reciprocally relative to each other.

2. The lightweight human body assistance device according to claim 1, wherein
a front end of the first drive rod (1) is connected to the stator housing (31), and a back end of the first drive rod (1) is connected to the first drive back end (41) that fits the leg on one side of the human body; and
a front end of the second drive rod (2) is connected to the rotor shaft (32), and a back end the second drive rod (2) is connected to the second drive back end (42) that fits the leg on the other side of the human body.

3. The lightweight human body assistance device according to claim 2, wherein a fixing joint (6) is connected to each of the first drive rod (1) and the second drive rod (2), the fixing joint (6) is connected to the human body and provides support and fixation for the drive actuator (3), the first drive rod (1) and the second drive rod (2), and each of the first drive rod (1) and the second drive rod (2) rotates around a corresponding fixing joint (6).

4. The lightweight human body assistance device according to claim 3, wherein the fixing joint (6) is fixed around a hip joint of the human body.

5. The lightweight human body assistance device according to claim 4, further comprising: a waist belt (5) that matches the human body; wherein the fixing joint (6) is fixed around the hip joint of the human body through the waist belt (5).

6. The lightweight human body assistance device according to claim 2 or 3, wherein the first drive rod (1) comprises a first rotating arm (11) and a first curved rod (12); and the second drive rod (2) comprises a second rotating arm (21) and a second curved rod (22);
a front end of the first rotating arm (11) is connected to the stator housing (31), and a back end of the first curved rod (12) is equipped with the first drive back end (41) that is connected to and matches the leg on one side of the human body; and
a front end of the second rotating arm (21) is connected to the rotor shaft (32), and a back end of the second curved rod (22) is equipped with the second drive back end (42) that is connected to and matches the leg on the other side of the human body.

7. The lightweight human body assistance device according to claim 6, wherein the first rotating arm (11) and the first curved rod (12) are hinged; and the second rotating arm (21) and the second curved rod (22) are hinged.

8. The lightweight human body assistance device according to claim 6, wherein
there is a certain range of relative displacement space between the first curved rod (12) and the first drive back end (41); and
there is a certain range of relative displacement space between the second curved rod (22) and the second drive back end (42).

9. The lightweight human body assistance device according to claim 8, wherein
a connecting block (40) is arranged between the first curved rod (12) and the first drive back end (41) ,the first curved rod (12) is connected to one side of the connecting block (40) through a spherical linkage, and the first drive back end (41) is slidably connected to other side of the connecting block (40); and
a connecting block (40) is arranged between the second curved rod (22) and the second drive back end (42), the second curved rod (22) is connected to one side of the connecting block (40) through a spherical linkage, and the second drive back end (42) is slidably connected to other side of the connecting block (40).

10. The lightweight human body assistance device according to claim 9, wherein the first drive back end (41) and the second drive back end (42) are arc-shaped plates that match the legs of the human body.

11. The lightweight human body assistance device according to claim 10, wherein the arc-shaped plates are located in front of or behind the legs of the human body.

12. The lightweight human body assistance device according to any one of claims 7 to 10, wherein the drive actuator (3) is horizontally positioned at a back or front of waist and abdomen of the human body.

13. The lightweight human body assistance device according to claim 12, wherein the first drive rod (1) and the second drive rod (2) are rigidly connected to the two sides of the drive actuator (3), respectively; and the drive actuator (3) is suspended around the human body when in use.

14. The lightweight human body assistance device according to claim 4, wherein an angle between the first drive rod (1) and the stator housing (31) is adjustable, and an angle between the second drive rod (2) and the rotor shaft (32) is adjustable.

15. The lightweight human body assistance device according to claim 4 or 13, wherein the stator housing (31) is set inside a sleeve (33), one side of the sleeve (33) is provided with an opening that allows the stator housing (31) to move reciprocally relative to the sleeve (33), and a depth of the stator housing (31) in the sleeve (33) is adjustable; and
the first drive rod (1) is connected to the stator housing (31) through the sleeve (33), and an angle between the first drive rod (1) and the stator housing (31) is adjustable.
